# EUROPÄISCHE PATENTSCHRIFT

(11) **EP 3 742 319 B1**
(45) Veröffentlichungstag und Bekanntmachung des Hinweises auf die Patenterteilung: **20.09.2023**
(21) Anmeldenummer: 20020237.2
(22) Anmeldetag: 19.05.2020
(51) Int. Cl.: G06F 21/60, G06F 21/64, H04L 9/32

(54) **SEITENKANALSICHERE IMPLEMENTIERUNG**
SIDE CHANNEL SECURE IMPLEMENTATION
MISE EN OEUVRE SÉCURISÉE DU CANAL LATÉRAL

(30) Priorität: 24.05.2019 DE 102019003673
(43) Veröffentlichungstag der Anmeldung: 25.11.2020
(73) Patentinhaber: Giesecke+Devrient Mobile Security GmbH, 81677 München (DE)
(72) Erfinder: Stocker, Thomas, 81739 München (DE); Hirschinger, Jürgen, 85375 Neufahrn (DE)
(74) Vertreter: Giesecke + Devrient IP

(56) Entgegenhaltungen:
- EP-A1- 3 376 426
- WO-A1-2019/081919
- US-A1- 2007 245 147
- US-A1- 2018 294 968
- KUROKAWA TAKASHI ET AL: "Can We Securely Use CBC Mode in TLS1.0?", 19. November 2015 (2015-11-19), 12TH EUROPEAN CONFERENCE ON COMPUTER VISION, ECCV 2012; [LECTURE NOTES IN COMPUTER SCIENCE], SPRINGER BERLIN HEIDELBERG, BERLIN GERMANY, PAGE(S) 151 - 160, XP047523950, ISSN: 0302-9743 ISBN: 978-3-319-23527-1 [gefunden am 2015-11-19] * Abbildung 1 *

## Beschreibung

Die vorliegende Erfindung ist auf ein Verfahren zur seitenkanalsicheren Authentizitätsprüfung und Entschlüsselung einer verschlüsselten Nachricht gerichtet, wobei es möglich ist, Angriffe wie einen sogenannten Padding Oracle Attack abzuwehren. Erfindungsgemäß ist u. a. vorgesehen, dass Routinen nach dem Entschlüsseln in jedem Fall ausgeführt werden, so dass nicht erkennbar ist, ob eine Entschlüsselung erfolgreich war oder nicht. Darüber hinaus wird eine Vorrichtung zur seitenkanalsicheren Authentizitätsüberprüfung und Entschlüsselung vorgeschlagen sowie ein Computerprogrammprodukt mit Steuerbefehlen, welche das vorgeschlagene Verfahren implementieren bzw. die Vorrichtung betreiben.

Bekannt ist die Druckschrift "GlobalPlatform", Card Specification, Version 2.1.1, März 2003, welche generell Aspekte der Datenkommunikation bezüglich einer Smartcard aufzeigt.

US 2013/0346749 A1 zeigt Verfahren zur Abwendung des sogenannten "Padding Oracle Attack". Diese Druckschrift sieht vor, dass eine Fehlermeldung ersetzt wird und sodann zur Verschleierung der Antwortzeiten weitere Warteperioden eingeführt werden, so dass der Angreifer weder Zugriff auf die eigentliche Fehlermeldung erhält, noch auf die Ausführungszeiten.

US 2017/0054741 A1 zeigt ein Verfahren zum Abwehren von einer sogenannten "Padding Oracle Attack", wobei eine Datenbank Verwendung findet.

US2007/0245147A1 zeigt ein Verfahren zur Authentizitätsüberprüfung unter Verwendung einer Prüfinformation (MAC), in die Störinformation eingeht.

US 2018/294968 A1 zeigt ein Entschlüsselungs- und Verifizierungsverfahren. Dabei wird ein datenabhängiger Vektor IV erzeugt, der zusammen mit einem Schlüssel durch Blockentschlüsselung Klartext erzeugt. Der entschlüsselte Klartext wird unter Verwendung des Schlüssels und des Initialisierungsvektors erneut verschlüsselt, wodurch ein Chiffretext erzeugt wird. Ein Teil des Chiffretextes wird als Etikett extrahiert, und wird bei der Authentifizierung mit einem vorhandenen Etikett verglichen.

Ferner zeigt die Nicht-Patentliteratur "Finding and fixing padding oracle attacks", abgerufen am 19. Juni 2018 von www.astechconsulting.com/blog/finding-and-fixing-padding-oracle-attacks des Autors Phillip Seay im letzten Drittel, dass die sogenannte "Padding Oracle Attack" dadurch unterbunden werden kann, dass alle Fehlermeldungen allgemein gleich behandelt werden und Zeitverzögerungen eingeführt werden, die die Ausführungsschritte bzgl. der benötigten Zeit verschleiern.

Aus dem Stand der Technik sind Angriffe auf eine Datenkommunikation bekannt, die das Ziel haben, die Datenkommunikation zu entschlüsseln bzw. zu verfälschen. Ebenso zielen entsprechende Verfahren darauf ab, einen anderen Kommunikationspartner vorzutäuschen. So ist nicht die Datenkommunikation an sich ausschließlich von Relevanz, sondern vielmehr ist es ein sicherheitskritischer Aspekt, dass stets die vorgesehenen Kommunikationspartner miteinander interagieren. So ist aus dem Stand der Technik u. a. der sogenannte Oracle Padding Attack bekannt, bei dem aufgrund eines Laufzeitverhaltens eines Entschlüsselungsalgorithmus Rückschlüsse auf einen Erfolg einer Entschlüsselung gezogen werden und diese sodann bei einem weiteren Angriffsschritt mitberücksichtigt werden.

Dem Padding Oracle Attack Verfahren liegt zugrunde, dass Datenpakete bereitgestellt werden, welche neben der Nutzlast auch eine Füllinformation bereitstellen. Eine solche Füllinformation, auch als Padding-Information bezeichnet, dient der Erschaffung einer konstanten Datenlänge. So sehen bestimmte Protokolle bzw. allgemein Spezifikationen vor, dass Datenpakete einer bestimmten Länge erwartet werden. Erfüllt ein Datensatz mit Nutzdaten eine solche Anforderung nicht, so werden nach spezifischen Schemata Fülldaten eingefügt, so dass letztendlich tatsächlich die gewünschte Länge entsteht.

Solche aufgefüllten Datenpakete werden verschlüsselt übertragen, und zum Entschlüsseln eines solchen Datenpakets bzw. eines Entschlüsselns der Nutzdaten ist es erforderlich, dass zuerst das gesamte Datenpaket bzw. die Nutzlast und die Fülldaten entschlüsselt werden, und sodann werden die Fülldaten abgestreift. Letztendlich verbleibt die entschlüsselte Nachricht an sich, also die Nutzdaten, ohne entsprechende Fülldaten.

Sodann können weitere Verfahren angewendet werden, die dem Verifizieren der Nutzdaten dienen, wie beispielsweise ein Abprüfen eines sogenannten Message Authentication Codes. Der Message Authentication Code ist ein Verfahren, welches dem Entschlüsseln nachgelagert angewendet werden kann, und das dazu eingesetzt wird, die Integrität der Daten zu gewährleisten bzw. auch sicherzustellen, dass die Daten von dem gewünschten Kommunikationspartner stammen.

Generell ist es darüber hinaus bekannt, eine Seitenkanalinformation bei einem Angriff auf Daten zu verwenden. Bei einer Seitenkanalinformation handelt es sich um eine Implikation eines Ausführungsverlaufs eines Programms derart, dass beispielsweise sensorisch eine physikalische Veränderung gemessen werden kann und hierauf Rückschlüsse auf den Programmverlauf geschlossen werden können. Am Beispiel einer Smartcard kann dies dadurch verdeutlicht werden, dass anhand der geringen Ströme, welche benötigt werden, um einen Maschinencode auszuführen, abgeschätzt werden kann, wie rechenaufwändig die zugrundeliegenden Algorithmen sind. Ein gleiches Ergebnis ergibt sich aus einer Laufzeitanalyse, welche in Abhängigkeit der zugrundeliegenden Hardwareressourcen derart verwendet werden kann, dass Rückschlüsse auf einen Programmverlauf geschlossen werden können. Soll gemäß einem vorgegebenen Algorithmus beispielsweise eine mehrstufige Sicherheitsroutine ausgeführt werden, so kann anhand einer Laufzeit bestimmt werden, wie viele Stufen abgearbeitet wurden. Terminiert das Verfahren zeitnah, so wurden lediglich wenige Stufen abgearbeitet, und bei einer längeren Ausführungsdauer des Verfahrens ist davon auszugehen, dass das Verfahren tatsächlich auch mehrere Stufen durchlaufen hat. Somit lässt sich anhand der Laufzeit und des Energiebedarfs abschätzen, wie viele Verfahrensschritte durchgeführt wurden, und folglich können neue Eingabewerte eines Angriffs darauf abgestimmt werden.

Generell besteht ein Bedarf an Verfahren, welche es nicht erlauben, Spezifika bzw. Implikationen eines Programmverlaufs offenzulegen. Solche Verschleierungsmechanismen sollen in Abhängigkeit der zugrundeliegenden Hardwarestruktur geschaffen werden und sollen derart geschickt mit einem normalen Programmverlauf interagieren, so dass einem Angreifer tatsächlich keine Information gegeben wird, wie der eigentliche Programmverlauf ausgestaltet ist. Insbesondere soll ein Verfahren geschaffen werden, welches es ermöglicht, dass eine Seitenkanalinformation, insofern diese tatsächlich zu erstellen ist, verborgen wird bzw. so in weitere Informationen eingebettet wird, dass die Seitenkanalinformation als solche nicht erkennbar ist. Hierdurch wird sichergestellt, dass der Programmablauf als eine sogenannte Black Box abläuft, und folglich ein Angreifer keinerlei Nebenbedingungen eines Programmablaufs abgreifen kann.

Demgemäß ist es eine Aufgabe der vorliegenden Erfindung, ein verbessertes Verfahren zur seitenkanalsicheren Authentizitätsprüfung und Entschlüsselung einer verschlüsselten Nachricht bereitzustellen, wobei zuverlässig sichergestellt wird, dass ein Angreifer beispielsweise nicht erkennt, warum ein Entschlüsseln scheitert. Somit ist es dem Angreifer auch nicht möglich, Implikationen eines Programmverlaufs auszumessen und somit Nutzdaten zu erraten. Ferner ist es eine Aufgabe der vorliegenden Erfindung, eine entsprechend eingerichtete Vorrichtung bereitzustellen sowie ein Computerprogrammprodukt mit Steuerbefehlen, welche das vorgeschlagene Verfahren ausführen bzw. die vorgeschlagene Vorrichtung betreiben.

Die Aufgabe wird gelöst mit den Merkmalen der unabhängigen Patentansprüche. Weitere vorteilhafte Ausgestaltungen sind in den Unteransprüchen angegeben.

Demgemäß wird ein Verfahren zur seitenkanalsicheren Authentizitätsprüfung und Entschlüsselung einer verschlüsselten Nachricht vorgeschlagen, aufweisend ein Bereitstellen eines Datenpakets aufweisend die mitsamt Fülldaten verschlüsselte Nachricht sowie eine Prüfinformation zur Authentizitätsüberprüfung der Nachricht, ein Entschlüsseln der verschlüsselten Nachricht mitsamt der Fülldaten, ein Entfernen der Fülldaten und ein Durchführen der Authentizitätsüberprüfung der entschlüsselten Nachricht unter Verwendung der Prüfinformation unabhängig von einem Ergebnis des Entschlüsselns.

Das vorgeschlagene Verfahren ist seitenkanalsicher, da generell vorgesehen ist, dass das Durchführen der Authentizitätsüberprüfung unabhängig von einem Ergebnis des Entschlüsselns verläuft. Folglich wird erfindungsgemäß in jedem Fall eine solche Authentizitätsüberprüfung durchgeführt, und dies bietet u. a. den Vorteil gegenüber dem Stand der Technik, dass nicht erkennbar ist, ob ein Entschlüsseln erfolgreich war oder nicht. Gemäß dem Stand der Technik besteht der Nachteil, dass bei einem fehlerhaften Entschlüsseln abgebrochen wird und eben keine Authentizitätsüberprüfung stattfindet. Erfindungsgemäß kann ein Angreifer hierbei keinerlei Rückschlüsse daraus ziehen, ob eine willkürlich bereitgestellten Dateneingabe zu einem Erfolg geführt hat oder nicht. So wird ganz unabhängig von der Richtigkeit eines Entschlüsselns stets die Authentizitätsüberprüfung durchgeführt, und folglich ergibt sich stets ein mindestens ähnliches Laufzeitverhalten. Darüber hinaus werden gemäß weiterer Aspekte der vorliegenden Erfindung einzelne Vorgehensweise vorgeschlagen, die ein Ausführen von einem Programmverlauf vorsehen, wie es gemäß einem erfolgreichen Entschlüsseln vorgesehen ist, und additiv wird eine fehlerhafte Routine nachgeahmt, so dass in jedem Fall die gleichen Implikationen ausgelöst werden. Somit ist eben auch ein Laufzeitverhalten zeitlich nicht zu analysieren und entsprechende Ströme geben keinerlei Hinweis auf einen Erfolg des Entschlüsselns.

Da letztendlich erfindungsgemäß ein Entschlüsseln der verschlüsselten Nachricht durchgeführt werden soll, ist es besonders vorteilhaft, dass die Authentizitätsüberprüfung seitenkanalsicher erfolgt sowie das Entschlüsseln seitenkanalsicher. Folglich wird sichergestellt, dass dem Angreifer keinerlei Hinweis auf die Entschlüsselung an sich gegeben wird, da überhaupt nicht bekannt ist, ob die Nachricht nunmehr tatsächlich entschlüsselt vorliegt, oder aber ob abgefälschte Daten vorliegen. Ganz unabhängig hiervon erfolgt stets ein Durchführen der Authentizitätsüberprüfung, auch wenn dies in einem Fehlerfall insofern dahingestellt bleiben kann, als das Endergebnis nicht verwertbar ist. Der vorteilhafte Aspekt hierbei ist, dass auch bei einem Fehlerfall eine Authentizitätsüberprüfung erfolgt, und folglich wird stets das gleiche Ausführungsverhalten gezeigt, auch wenn ausgehend von einem fehlerhaften Entschlüsseln keine erfolgreiche Authentizitätsüberprüfung zu erwarten ist. Hierbei soll lediglich sichergestellt werden, dass keine Seitenkanalinformation erzeugt wird, auch wenn hierbei ein höherer Rechenaufwand in Kauf genommen wird.

Eine solche Hürde vermag der Stand der Technik nicht zu überwinden und wird folglich auch davon abgehalten, stets die Authentizitätsüberprüfung zu veranlassen, auch wenn die Entschlüsselung entsprechender Daten fehlgeschlagen ist.

Initial erfolgt ein Bereitstellen eines Datenpakets aufweisend die mitsamt Fülldaten verschlüsselte Nachricht sowie eine Prüfinformation zur Authentizitätsüberprüfung der Nachricht. Folglich werden also in einem vorbereitenden Verfahrensschritt die Nachricht und die Fülldaten gemeinsam verschlüsselt, so dass diese zusammen einen Teil des Datenpakets ausmachen. Darüber hinaus wird additiv eine Prüfinformation bereitgestellt, die der Authentizitätsüberprüfung der Nachricht an sich dient. Somit müssen also in weiteren Verfahrensschritten die Nachricht mitsamt Fülldaten entschlüsselt werden, so dass die Nachricht und die Fülldaten separierbar sind. Hierauf kann die Nachricht anhand der Prüfinformation bezüglich ihrer Authentizität überprüft werden.

Bei dem bereitgestellten Datenpaket handelt es sich um eine Information, welche netzwerktechnisch übermittelt wird. So kann das Datenpaket weitere netzwerktypische Einheiten aufweisen. Generell ist es vorteilhaft, ein solches Datenpaket mit einer sogenannten Headerinformation auszustatten, so dass netzwerktypische Aufgaben erledigt werden können. So können Headerdaten eine Information bereitstellen, wie ein entsprechendes Paket in einem Netzwerk zu vermitteln ist, bzw. können Metadaten bereitgestellt werden, die die Nutzdaten des Datenpakets beschreiben. So kann in einem Header codiert werden, welche Einheiten das Datenpaket aufweist und welchen Typs entsprechende Felder sind.

Das Datenpaket kann generell in Bytes unterteilt werden, derart, dass die Headerinformation eine gewisse Anzahl an Bytes belegt, sowie unabhängig hiervon die Nutzdaten, also die Nachricht, und ebenfalls die Fülldaten. Folglich kann ein Byte eine Dateneinheit darstellen, wobei bekannterweise ein Byte aus 8 Bits besteht. Generell ist die vorliegende Erfindung jedoch nicht auf eine solche Aufteilung beschränkt, und der Fachmann kennt weitere Aufteilungen, wie er entsprechende Felder unterteilen kann.

Erfindungsgemäß ist es vorgesehen, dass ein Entschlüsseln der verschlüsselten Nachricht mitsamt deren Fülldaten erfolgt. Generell wird die Nachricht mitsamt Fülldaten initial verschlüsselt, so dass nunmehr ein entsprechendes Entschlüsseln vorgesehen ist, derart, dass letztendlich die unverschlüsselte Nachricht resultiert und die unverschlüsselten Fülldaten. Die Fülldaten tragen keinerlei Nutzdaten und können sodann verworfen bzw. entfernt werden. Die Nachricht liegt zwar generell unverschlüsselt vor bzw. entschlüsselt, was jedoch nicht bedeutet, dass der Inhalt der Nachricht auch vertrauenswürdig ist. Folglich erfolgt eine Authentizitätsüberprüfung derart, dass die Integrität der Nachricht überprüft werden muss und zudem ggf. auch überprüft wird, ob die Nachricht tatsächlich von dem vorgesehenen Kommunikationspartner stammt. Somit umfasst die Authentizitätsüberprüfung der Nachricht mindestens, dass die Integrität, also die Unversehrtheit bzw. Richtigkeit des Inhalts der Nachricht, überprüft wird, und optional wird überprüft, ob die Nachricht von dem vorgesehenen Kommunikationspartner stammt. Vorzugsweise werden beide Kriterien überprüft.

Die Authentizitätsüberprüfung erfolgt anhand der bereitgestellten Prüfinformation, die abgespeichert werden kann und anhand des Datenpakets zusätzlich bereitgestellt werden kann, so dass ein Vergleichen bei einer Übereinstimmung zu einer positiven Authentizitätsüberprüfung der entschlüsselten Nachricht führt. Hierzu können generell bekannte Verfahren angewendet werden, die das Anwenden der Prüfinformation vorsehen.

Es ist besonders vorteilhaft, dass unabhängig von dem Ergebnis des Entschlüsselns die Authentizitätsüberprüfung durchführt wird, da also diese Überprüfung in jedem Fall stattfindet. Der Stand der Technik bricht bei einem negativen bzw. gescheiterten Entschlüsseln das Verfahren ab und gibt somit einen Hinweis auf den Programmverlauf. Erfindungsgemäß wird davon abgesehen und es wird der größere technische Aufwand in Kauf genommen, in jedem Fall eine Authentizitätsüberprüfung durchzuführen, auch wenn diese auf fälschlich entschlüsselter Nachrichten basiert. Somit erfolgt in diesem Fall stets eine negative Authentizitätsüberprüfung, wobei ganz unabhängig von dem Ergebnis stets das gleiche Laufzeitverhalten gezeigt wird.

Gemäß einem Aspekt der vorliegenden Erfindung wird das Durchführen der Authentizitätsüberprüfung auf mindestens zwei Teilinhalten des Datenpakets angewendet. Aufgrund des Ermittelns von zwei Authentisierungsergebnissen wird die Authentizitätsüberprüfung unabhängig vom Entschlüsselungsergebnis. Ein Angreifer kann nicht erkennen, ob ein Entschlüsseln erfolgreich war oder nicht. Bei zwei Teilinhalten kann es sich um Teilsequenzen des Datenpakets handeln, insbesondere um Teilsequenzen der entschlüsselten Nachricht. Durch eine Überprüfung eines ersten Teilinhalts wird die Überprüfung des zweiten Teilinhalts verborgen. Die beiden Teilinhalte müssen nicht notwendigerweise disjunkt sein, sondern können sich vielmehr auch überlappen.

Gemäß einem weiteren Aspekt der vorliegenden Erfindung unterscheiden sich die zwei Teilinhalte um eine Längeneinheit. Dies hat den Vorteil, dass, falls das Datenpaket in Blöcke unterteilt ist, eine erste Authentizitätsüberprüfung auf n Blöcken durchgeführt werden kann, und die zweite Authentizitätsüberprüfung auf einer Anzahl von n-1 Blöcken durchgeführt werden kann. Dies ist deshalb vorteilhaft, da bei einer eventuell manipulierten Nachricht mit manipulierten verschlüsselten sogenannten Padding-Bytes das Unpadding nicht mehr korrekt erfolgen kann, und die MAC-Berechnung würde einen Block mehr oder weniger ergeben. Um im Manipulationsfall keine unterschiedlichen Ausführungszeiten zu erhalten, wird nun der sogenannte MAC1 für n-1 und der MAC2 für n Blöcke berechnet.

Gemäß einem weiteren Aspekt der vorliegenden Erfindung werden zwei Authentizitätsüberprüfungsergebnisse ermittelt. Dies hat den Vorteil, dass abhängig von dem Entschlüsselungsergebnis entweder eine MAC1 oder eine MAC2 zur Authentizitätsprüfung verwendet. Somit wird der Schritt des Durchführens der Authentizitätsüberprüfung wiederholt ausgeführt, und der Angreifer kann keinerlei Rückschlüsse auf eine erfolgreiche Authentizitätsüberprüfung ziehen.

Gemäß einem weiteren Aspekt der vorliegenden Erfindung erfolgen die Iterationen des Durchführens der Authentizitätsüberprüfung zeitausgleichend. Dies hat den Vorteil, dass stets die gleiche Zeitspanne benötigt wird, und, falls eine erste Iteration kürzer als üblich dauert, so kann die zweite Überprüfung derart länger dauern, dass stets das gleiche Zeitintervall in Anspruch genommen wird. Somit kann direkt Einfluss auf die Laufzeit insgesamt genommen werden und es sind wiederum keine Rückschlüsse von der Laufzeit des vorgeschlagenen Verfahrens abzuleiten.

Gemäß einem weiteren Aspekt der vorliegenden Erfindung wird die Länge der Fülldaten unabhängig von weiteren Daten ermittelt. Dies hat den Vorteil, dass die Daten, insbesondere die Nachricht bzw. die Nutzdaten, unabhängig von der Länge der Fülldaten sind, so dass ausgehend von einer ausgelesenen Länge der Fülldaten kein Rückschluss auf die eigentlichen Daten gegeben werden kann. Teilweise ist es im Stand der Technik nachteilig, dass ausgehend von den sogenannten Padding-Bytes ein Rückschluss auf eine Länge von Datenfeldern gezogen werden kann. Dies wird erfindungsgemäß überwunden.

Gemäß einem weiteren Aspekt der vorliegenden Erfindung liegt die Prüfinformation als ein Message Authentication Code MAC vor bzw. die Authentizitätsüberprüfung wird als eine Message Authentication Code Überprüfung durchgeführt. Dies hat den Vorteil, dass bestehende Verfahren erfindungsgemäß wiederverwendet werden können, und insbesondere kann ein Überprüfen der Nachricht anhand bereits implementierter Verfahren durchgeführt werden. Insbesondere kann die Prüfinformation als Message Authentication Code mehrfach angewendet werden und es kann eine bewehrte Überprüfung durchgeführt werde, die bezüglich ihres Laufzeitverhaltens nicht zu analysieren ist.

Gemäß einem weiteren Aspekt der vorliegenden Erfindung wird eine Seitenkanalinformation verborgen. Dies hat den Vorteil, dass die einzelnen Iterationen des Überprüfens entweder parallel oder seriell ausgeführt werden, derart, dass keinerlei Rückschluss auf eine Laufzeit oder einen Energiebedarf geschlossen werden kann. Außerdem können weitere Verfahrensschritte eingestreut werden, die willkürliche Berechnungen vornehmen können, so dass das Laufzeitverhalten keinerlei Rückschluss auf ein erfolgreiches Entschlüsseln gibt. Außerdem können solche Verfahrensschritte bewirken, dass sich ein entsprechender Mikrocontroller minimal erwärmt, was dazu führt, dass auch ein Temperaturverhalten randomisiert werden kann.

Gemäß einem weiteren Aspekt der vorliegenden Erfindung werden die Fülldaten als Padding-Bytes bereitgestellt. Dies hat den Vorteil, dass die einzelnen Einheiten, welche das Datenpaket unterteilen, als Bytes vorliegen, und zudem bestehen bereits Verfahren, die vorsehen, wie solche Padding-Bytes erzeugt werden. Erfindungsgemäß können folglich solche Verfahren wiederverwendet werden, wobei das vorgeschlagene Verfahren den Programmverlauf derart abändert, dass unabhängig von dem Entfernen der Padding-Bytes ein Überprüfen der Nachricht erfolgt. Somit wird der Nachteil im Stand der Technik überwunden, dass ausgehend von einem Verhalten, welches sich auf das Abstreifen der Padding-Bytes bezieht, Rückschlüsse gezogen werden können.

Gemäß einem weiteren Aspekt der vorliegenden Erfindung bietet das Verfahren eine Schnittstelle an, welche weiteren Datendiensten mindestens einen eingeschränkten Zugriff auf das Datenpaket anbietet. Dies hat den Vorteil, dass das übermittelte Datenpaket nicht einfach gemäß herkömmlicher Verfahren analysiert werden kann, welche sodann wiederum den sogenannten Padding Oracle Attack anwenden. Vielmehr wird das Datenpaket verborgen und es wird eine Schnittstelle angeboten, die lediglich einen eingeschränkten Zugriff auf das Datenpaket zulässt. Folglich kann auch ein Missbrauch unterbunden werden und das Datenpaket wird besonders geschützt.

Gemäß einem weiteren Aspekt der vorliegenden Erfindung wird das Verfahren als Netzwerkprotokoll ausgestaltet. Dies hat den Vorteil, dass das Verfahren auch in einem Computernetzwerk verteilt ausgeführt werden kann und somit ein Nachrichtenaustausch erfindungsgemäß koordiniert werden kann. Bei einem Netzwerkprotokoll handelt es sich insbesondere um eine Handlungsanweisung an unterschiedliche Komponenten, welche in einem Computernetzwerk anhand eines Nachrichtenaustausches miteinander kooperieren.

Gemäß einem weiteren Aspekt der vorliegenden Erfindung wird eine exklusive Schnittstelle auf das Datenpaket vorgesehen. Dies hat den Vorteil, dass das Datenpaket nicht mit Schnittstellen angegriffen werden kann, welche einen Padding Oracle Attack ermöglichen. Die exklusive Schnittstelle sieht vor, dass allein erfindungsgemäß das Datenpaket analysiert werden kann bzw. entschlüsselt und überprüft werden kann. Somit sind weitere Datendienste von einem unberechtigten Zugriff bzw. Abprüfen des Datenpakets ausgeschlossen.

Die Aufgabe wird auch gelöst durch eine Vorrichtung zur seitenkanalsicheren Authentizitätsüberprüfung und Entschlüsselung einer verschlüsselten Nachricht, aufweisend einen Datenspeicher eingerichtet zum Bereitstellen eines Datenpakets aufweisend die mitsamt Fülldaten verschlüsselte Nachricht sowie eine Prüfinformation zur Authentizitätsüberprüfung der Nachricht, eine Entschlüsselungseinheit eingerichtet zum Entschlüsseln der verschlüsselten Nachricht mitsamt der Fülldaten, eine Extraktionseinheit eingerichtet zum Entfernen der Fülldaten und eine Prüfeinheit eingerichtet zum Durchführen der Authentizitätsüberprüfung der entschlüsselten Nachricht unter Verwendung der Prüfinformation unabhängig von einem Ergebnis des Entschlüsselns.

Die Aufgabe wird auch gelöst durch ein Computerprogrammprodukt mit Steuerbefehlen, welche das vorgeschlagene Verfahren implementieren bzw. die vorgeschlagene Vorrichtung betreiben.

Erfindungsgemäß ist es besonders vorteilhaft, dass das Verfahren Verfahrensschritte anbietet, welche bezüglich ihrer Funktion auch von strukturellen Merkmalen der Vorrichtung nachgebildet werden können. So weist die Vorrichtung strukturelle Merkmale auf, welche bezüglich ihrer Funktion den Verfahrensschritten entsprechen. Insgesamt ist das Verfahren geeignet, die Vorrichtung zu betreiben, und die Vorrichtung ist geeignet, das Verfahren auszuführen.

Weitere vorteilhafte Ausgestaltungen werden anhand der beigefügten Figuren näher erläutert. Es zeigen:
- Fig. 1:: einen schematischen Aufbau eines Datenpakets gemäß dem Stand der Technik als Ausgangspunkt für die vorliegende Erfindung;
- Fig. 2:: ein Überprüfen eines Datenpakets gemäß einem Aspekt der vorliegenden Erfindung;
- Fig. 3:: einzelne Ausführungsdetails des vorgeschlagenen Verfahrens zur seitenkanalsicheren Authentizitätsüberprüfung und Entschlüsselung gemäß einem Aspekt der vorliegenden Erfindung; und
- Fig. 4:: ein schematisches Ablaufdiagramm zur seitenkanalsicheren Authentizitätsüberprüfung und Entschlüsselung gemäß einem weiteren Aspekt der vorliegenden Erfindung.

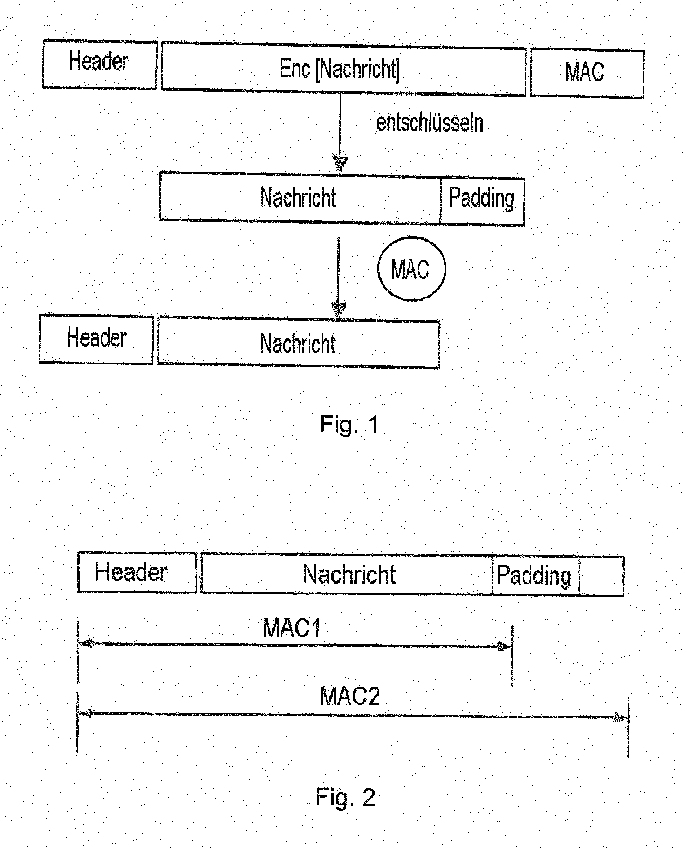

In Fig. 1 ist ein Datenpaket gezeigt, welches auf der linken Seite einen Header aufweist, in der Mitte eine verschlüsselte Nachricht mitsamt noch verschlüsselter Fülldaten, und auf der rechten Seite ist eine Prüfinformation MAC eingezeichnet. Die sogenannte SCP02-Spezifikation ist anfällig für den bereits beschriebenen Padding Oracle Attack. Die MAC wird über den APDU-Header plus Plaintext (ohne Padding-Bytes für Encrypt) berechnet. Die Plaintextlänge ist erst nach einem Unpadding verfügbar.

Der Sprung von der ersten Zeile in Fig. 1 auf die zweite zeigt, dass das Datenpaket die Nachricht enthält, welche mitsamt den Fülldaten verschlüsselt ist. So müssen die Fülldaten, also die Padding-Bytes, erst entfernt werden, so dass die eigentliche Nachricht resultiert, wie es in der unteren Zeile der Fig. 1 gezeigt ist.

Somit besteht also das Problem, dass ein Unpadding der Enc (Nachricht) nicht zu einer Exception, also einem Fehler, führt. Erfindungsgemäß wird also ein Decodieren Dec (Nachricht) mit der Option "NO_PAD" vorgeschlagen. Die Anzahl der Padding-Bytes wird datenunabhängig ermittelt.

Dies ist in Fig. 2 gezeigt, wobei immer ein Berechnen von MAC1 und MAC2 erfolgt. So können die folgenden Verfahrensschritte gemäß einem Aspekt der vorliegenden Erfindung stets ausgeführt werden:
- Calc always MAC1 & MAC2 value
   - MAC1.length = length of dec(message) - size of (APDU Header)
   - MAC2.length = MAC1.length + DES block length
- Compare MAC against MAC1 or MAC2 depending on number of padding bytes

Eine Straight-forward Implementierung des SCP02 Protokolls ist für einen "Padding Oracle Attack" anfällig, da die im Protkolldesign die Authentizitätsüberprüfung (MAC-Überprüfung) der Nachricht erst nach Entschlüsselung und Unpadding der Nachricht erfolgen kann.

Um den MAC zu berechnen, müssen die Padding-Bytes von der entschlüsselten Nachricht entfernt werden. Durch eine fehlerhafte Entschlüsselung (gezielte Manipulation der verschlüsselten Nachricht durch Angreifer), kann mittels Seitenkanalinformationen die Ursache ermittelt werden (unterschiedliche Ausführungszeit nachfolgenden der MAC-Berechnung) und damit der Plaintext der verschlüsselten Nachricht erraten werden.

Die Lösung sieht nun vor, dass die MAC-Berechnung immer durchgeführt wird, unabhängig von dem entschlüsselten Ergebnis.

Da durch evtl. manipulierten verschlüsselten Padding Bytes, das Unpadding nicht mehr korrekt erfolgen kann, würde die MAC Berechnung (je nach Anzahl der Padding Bytes) einen Block mehr oder wenig ergeben. Um im Manipulationsfall keine unterschiedlichen Ausführungszeiten zu erhalten, werden der MAC für n-1 und der MAC2 für n Blöcke berechnet.

Nach Überprüfung der Padding-Länge wird dann der übermittelte MAC mit dem relevanten MAC1 bzw. MAC2 zeitausgeglichen geprüft.

Es ist somit für den Angreifer nicht nachzuvollziehen, ob die MAC-Überprüfung fehlschlug, oder die Entschlüsselung, da in jedem Fall, also auch bei Manipulation, zwei Mal MAC berechnet wird. Der Angreifer erhält keine zusätzliche Information über die Ursache.

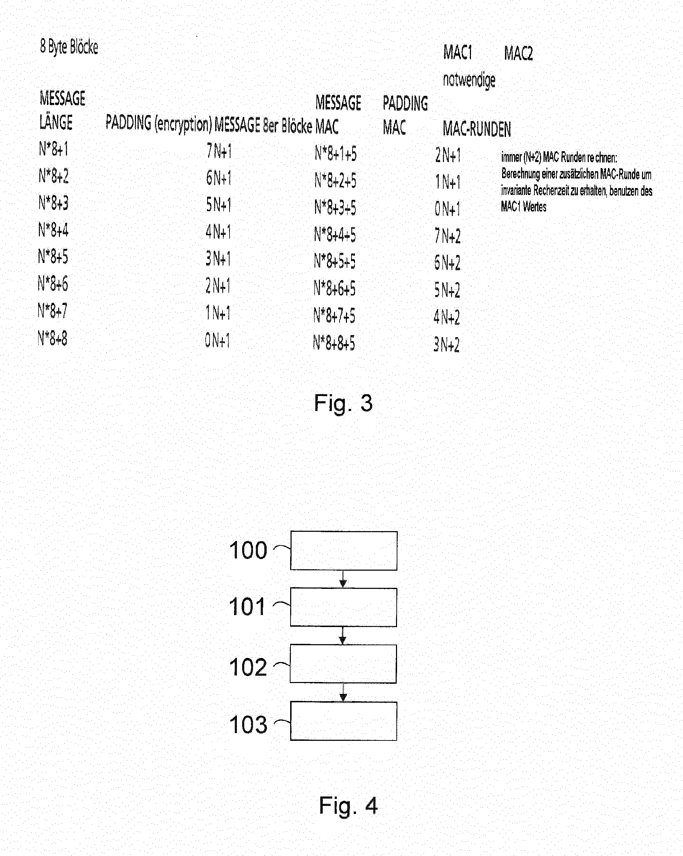

Fig. 3 zeigt Ausführungsdetails gemäß dem erfindungsgemäßen Verfahren. Links ist eine Nachrichtenlänge eingezeichnet, wobei sich die Zahl 8 auf 8 Bytes bezieht, denn es wird auf Vielfache von 8 "gepadded". Da die Verschlüsselungs- und die Berechnung der MAC ein Vielfaches einer bestimmten Blocklänge erfordert, im Falle des DES-Algorithmus beispielsweise Vielfache einer Blocklänge von 8 Byte, dient das Padding hier auch dem Block-Alignment. In der zweiten Spalte ist die Füllinformation aufgezeigt und in der dritten Spalte die Prüfinformation. Auf der rechten Seite ist eingezeichnet, wie oft die Iterationen des Überprüfens durchgeführt werden müssen. Insgesamt müssen immer (N+2) MAC-Iterationen berechnet werden. Die Berechnung einer zusätzlichen MAC-Iteration dient der Erzeugung einer invarianten Rechenzeit, wozu der Wert von MAC1 verwendet wird.

Die vorliegende Erfindung bezieht sich generell auf die Verschlüsselung von Daten und den sogenannten "Padding Oracle Attack", welcher vorsieht, dass aufgrund einer Seitenkanalinformation eine unberechtigte Entschlüsselung von Daten erfolgen kann. Gemäß der sogenannten SCP02 Spezifikation ist vorgesehen, dass eine Authentizitätsüberprüfung stattfindet, welche bestimmte Rechenschritte vorsieht. Vorliegend ist das die sogenannte MAC-Überprüfung. Es wird eine Nachricht gemäß dieser Spezifikation bereitgestellt, welche aus einem Header und einer codierten Nachricht mitsamt MAC-Information besteht.

Zum Entschlüsseln der Nachricht bzw. zu deren Authentizitätsüberprüfung gemäß einem Aspekt der vorliegenden Erfindung ist es notwendig, dass zuerst die verschlüsselte Nachricht entschlüsselt wird und sodann die sogenannten Padding Daten entfernt werden. Bei diesen Padding-Daten handelt es sich um einen Datenrahmen, der angeführt wird, um stets ein Nachrichtenfeld gleicher Länge zu erhalten. Hierdurch wird verhindert, dass ein Angreifer bereits von der Länge des Nachrichtenfeldes Rückschlüsse auf dessen Inhalt ziehen kann.

Ein Problem ergibt sich im Fall einer Manipulation der verschlüsselten Nachricht durch einen Angreifer, da Rückschlüsse von der MAC-Überprüfung dahingehend gezogen werden können, ob die Entschlüsselung erfolgreich war oder nicht. Erfolgt erst ein Entschlüsseln der verschlüsselten Nachricht und sodann ein Entfernen des Padding-Rahmens. Sodann erfolgt die MAC-Überprüfung. Gemäß dem beschriebenen Angriff kann somit festgestellt werden, ob das sogenannte Unpadding korrekt erfolgt ist oder nicht.

Erfindungsgemäß wird die Lösung vorgeschlagen, dass in jedem Fall zwei MAC-Überprüfungen erfolgen, nämlich MAC1 und MAC2. Da im Falle einer Manipulation ein Block weniger resultiert, wird gemäß MAC1 eine MAC-Berechnung für n-1 Blöcke durchgeführt. Daraufhin wird eine MAC2-Berechnung für n-Blöcke durchgeführt.

Aufgrund der beiden MAC-Berechnungen ist die Ausführungszeit unabhängig von dem Verschlüsselungsergebnis. Denn es werden immer zwei MAC-Ergebnisse ermittelt, wobei die Berechnung der beiden MAC bei einer erfolgreichen und einer fehlerhaften Entschlüsselung im Wesentlichen gleich lange dauern. Die Dauer der MAC-Berechnung ist somit unabhängig vom Padding.

Es werden also stets zwei MAC-Berechnungen durchgeführt, auch bei einem Manipulationsversuch. In jedem Fall resultieren aber die gleichen Ausführungszeiten und im Wesentlichen die gleichen Rechenschritte. Ein Angreifer kann also mittels Seitenkanalinformation keine Rückschlüsse über den Ablauf des Entschlüsselungsverfahrens erhalten.

Fig. 4 zeigt in einem schematischen Ablaufdiagramm das vorgeschlagene Verfahren zur seitenkanalsicheren Authentizitätsüberprüfung und Entschlüsselung einer verschlüsselten Nachricht, aufweisend ein Bereitstellen 100 eines Datenpakets aufweisend die mitsamt Fülldaten verschlüsselte Nachricht sowie eine Prüfinformation MAC zur Authentizitätsüberprüfung der Nachricht, ein Entschlüsseln 101 der verschlüsselten Nachricht mitsamt der Fülldaten, ein Entfernen 102 der Fülldaten und ein Durchführen 103 der Authentizitätsüberprüfung der entschlüsselten Nachricht 101 unter Verwendung der Prüfinformation MAC unabhängig von einem Ergebnis des Entschlüsselns 101.

Der Fachmann erkennt hierbei, dass die einzelnen Verfahrensschritte teilweise iterativ ausgeführt werden können und/oder Unterschritte aufweisen können.

## Patentansprüche

1. Verfahren zur seitenkanalsicheren Authentizitätsüberprüfung und Entschlüsselung einer verschlüsselten Nachricht, aufweisend:
- ein Bereitstellen (100) eines Datenpakets aufweisend die mitsamt Fülldaten verschlüsselte Nachricht sowie eine Prüfinformation (MAC) zur Authentizitätsüberprüfung der Nachricht;
- ein Entschlüsseln (101) der verschlüsselten Nachricht mitsamt der Fülldaten;
- ein Entfernen (102) der Fülldaten; und
- ein Durchführen (103) der Authentizitätsüberprüfung der entschlüsselten Nachricht (101) unter Verwendung der Prüfinformation (MAC) unabhängig von einem Ergebnis des Entschlüsselns (101), **gekennzeichnet dadurch, dass** das Durchführen (103) der Authentizitätsüberprüfung auf mindestens zwei Teilinhalten des Datenpakets angewendet wird, und sich die zwei Teilinhalte um eine Längeneinheit unterscheiden.

2. Verfahren nach Anspruch 1, **dadurch gekennzeichnet, dass** eine erste Authentizitätsüberprüfung auf n Blöcken des Datenpakets und eine zweite Authentizitätsüberprüfung auf n-1 Blöcken des Datenpakets durchgeführt wird, und eine erste Prüfungsinformation (MAC1) für n-1 Blöcke des Datenpakets und eine zweite Prüfungsinformation (MAC2) für n Blöcke des Datenpakets berechnet wird, um keine unterschiedlichen Ausführungszeiten zur erhalten.

3. Verfahren nach Anspruch 1 oder 2, **dadurch gekennzeichnet, dass** das Durchführen (103) der Authentizitätsüberprüfung iterativ erfolgt.

4. Verfahren nach Anspruch 3, **dadurch gekennzeichnet, dass** die Iterationen des Durchführens (103) der Authentizitätsüberprüfung zeitausgleichend erfolgen.

5. Verfahren nach einem der vorhergehenden Ansprüche, **dadurch gekennzeichnet, dass** eine Länge der Fülldaten unabhängig von weiteren Daten ermittelt wird.

6. Verfahren nach einem der vorhergehenden Ansprüche, **dadurch gekennzeichnet, dass** die Prüfinformation als ein Message Authentication Code (MAC) vorliegt.

7. Verfahren nach einem der vorhergehenden Ansprüche, **dadurch gekennzeichnet, dass** die Authentizitätsüberprüfung als eine Message Authentication Code Überprüfung durchgeführt wird.

8. Verfahren nach einem der vorhergehenden Ansprüche, **dadurch gekennzeichnet, dass** eine Seitenkanalinformation verborgen wird.

9. Verfahren nach einem der vorhergehenden Ansprüche, **dadurch gekennzeichnet, dass** die Fülldaten als Padding-Bytes bereitgestellt werden.

10. Verfahren nach einem der vorhergehenden Ansprüche, **dadurch gekennzeichnet, dass** das Verfahren eine Schnittstelle anbietet, welche weiteren Datendiensten mindestens einen eingeschränkten Zugriff auf das Datenpaket anbietet.

11. Verfahren nach einem der vorhergehenden Ansprüche, **dadurch gekennzeichnet, dass** das Verfahren als Netzwerkprotokoll ausgestaltet wird.

12. Verfahren nach einem der vorhergehenden Ansprüche, **dadurch gekennzeichnet, dass** eine exklusive Schnittstelle auf das Datenpaket vorgesehen wird.

13. Vorrichtung zur seitenkanalsicheren Authentizitätsüberprüfung und Entschlüsselung einer verschlüsselten Nachricht, aufweisend:
- einen Datenspeicher eingerichtet zum Bereitstellen (100) eines Datenpakets aufweisend die mitsamt Fülldaten verschlüsselte Nachricht sowie eine Prüfinformation (MAC) zur Authentizitätsüberprüfung der Nachricht;
- eine Entschlüsselungseinheit eingerichtet zum Entschlüsseln (101) der verschlüsselten Nachricht mitsamt der Fülldaten;
- eine Extraktionseinheit eingerichtet zum Entfernen (102) der Fülldaten; und
- eine Prüfeinheit eingerichtet zum Durchführen (103) der Authentizitätsüberprüfung der entschlüsselten Nachricht (101) unter Verwendung der Prüfinformation (MAC) unabhängig von einem Ergebnis des Entschlüsselns (101); **gekennzeichnet dadurch, dass** die Prüfeinheit eingerichtet ist, die Authentizitätsüberprüfung auf mindestens zwei Teilinhalten des Datenpakets durchzuführen, wobei sich die zwei Teilinhalte um eine Längeneinheit unterscheiden.

14. Vorrichtung nach Anspruch 13, **dadurch gekennzeichnet, dass** die Prüfeinheit eingerichtet ist, eine erste Authentizitätsüberprüfung auf n Blöcken des Datenpakets und eine zweite Authentizitätsüberprüfung auf n-1 Blöcken des Datenpakets durchzuführen und eine erste Prüfungsinformation (MAC1) für n-1 Blöcke des Datenpakets und eine zweite Prüfungsinformation (MAC2) für n Blöcke des Datenpakets berechnet wird, um keine unterschiedlichen Ausführungszeiten zur erhalten.

15. Computerprogrammprodukt mit Steuerbefehlen, welche das Verfahren gemäß einem der Ansprüche 1 bis 12 ausführen, wenn sie auf einem Computer zur Ausführung gebracht werden.

## Claims

1. Method for carrying out a side channel secure authenticity check and decryption on an encrypted message, comprising:
- providing (100) a data packet containing the encrypted message together with padding data and check information (MAC) for the authenticity check on the message;
- decrypting (101) the encrypted message together with the padding data;
- removing (102) the padding data; and
- performing (103) the authenticity check on the decrypted message (101) using the check information (MAC) independently of a result of the decryption (101), **characterized in that** the performance (103) of the authenticity check is applied to at least two subcontents of the data packet, and the two subcontents differ by one unit of length.

2. Method according to Claim 1, **characterized in that** a first authenticity check is performed on n blocks of the data packet and a second authenticity check is performed on n-1 blocks of the data packet, and first check information (MAC1) is computed for n-1 blocks of the data packet and second check information (MAC2) is computed for n blocks of the data packet in order not to obtain any different execution times.

3. Method according to Claim 1 or 2, **characterized in that** the performance (103) of the authenticity check is carried out iteratively.

4. Method according to Claim 3, **characterized in that** the iterations of the performance (103) of the authenticity check take place so as to achieve time equalization.

5. Method according to one of the preceding claims, **characterized in that** a length of the padding data is determined independently of other data.

6. Method according to one of the preceding claims, **characterized in that** the check information is in the form of a Message Authentication Code (MAC).

7. Method according to one of the preceding claims, **characterized in that** the authenticity check is performed as a Message Authentication Code check.

8. Method according to one of the preceding claims, **characterized in that** side channel information is concealed.

9. Method according to one of the preceding claims, **characterized in that** the padding data are provided as padding bytes.

10. Method according to one of the preceding claims, **characterized in that** the method offers an interface that offers other data services at least restricted access to the data packet.

11. Method according to one of the preceding claims, **characterized in that** the method is designed as a network protocol.

12. Method according to one of the preceding claims, **characterized in that** provision is made for an exclusive interface to the data packet.

13. Device for carrying out a side channel secure authenticity check and decryption on an encrypted message, comprising:
- a data memory configured to provide (100) a data packet containing the encrypted message together with padding data and check information (MAC) for the authenticity check on the message;
- a decryption unit configured to decrypt (101) the encrypted message together with the padding data;
- an extraction unit configured to remove (102) the padding data; and
- a checking unit configured to perform (103) the authenticity check on the decrypted message (101) using the check information (MAC) independently of a result of the decryption (101), **characterized in that** the checking unit is configured to perform the authenticity check on at least two subcontents of the data packet, wherein the two subcontents differ by one unit of length.

14. Device according to Claim 13, **characterized in that** the checking unit is configured to perform a first authenticity check on n blocks of the data packet and to perform a second authenticity check on n-1 blocks of the data packet, and first check information (MAC1) is computed for n-1 blocks of the data packet and second check information (MAC2) is computed for n blocks of the data packet in order not to obtain any different execution times.

15. Computer program product containing control instructions that carry out the method according to one of Claims 1 to 12 when they are executed on a computer.

## Revendications

1. Procédé de contrôle de l'authenticité et de décryptage d'un message crypté, avec sécurisation du canal latéral, comprenant :
- une fourniture (100) d'un paquet de données présentant le message crypté y compris des données de remplissage ainsi qu'une information de contrôle (MAC) servant au contrôle de l'authenticité du message ;
- un décryptage (101) du message crypté y compris les données de remplissage ;
- une suppression (102) des données de remplissage ; et
- une réalisation (103) du contrôle de l'authenticité du message décrypté (101) en utilisant l'information de contrôle (MAC) indépendamment d'un résultat du décryptage (101), **caractérisé en ce que** la réalisation (103) du contrôle de l'authenticité est appliquée sur au moins deux contenus partiels du paquet de données, et les deux contenus partiels se différencient d'une unité de longueur.

2. Procédé selon la revendication 1, **caractérisé en ce qu'**un premier contrôle de l'authenticité est réalisé sur n blocs du paquet de données et un deuxième contrôle de l'authenticité est réalisé sur n-1 blocs du paquet de données, et une première information de contrôle (MAC1) pour n-1 blocs du paquet de données ainsi qu'une deuxième information de contrôle (MAC2) pour n blocs du paquet de données sont calculées afin de ne pas obtenir des temps d'exécution différents.

3. Procédé selon la revendication 1 ou 2, **caractérisé en ce que** la réalisation (103) du contrôle de l'authenticité s'effectue de manière itérative.

4. Procédé selon la revendication 3, **caractérisé en ce que** les itérations de la réalisation (103) du contrôle de l'authenticité s'effectuent avec compensation du temps.

5. Procédé selon l'une des revendications précédentes, **caractérisé en ce qu'**une longueur des données de remplissage est déterminée indépendamment de données supplémentaires.

6. Procédé selon l'une des revendications précédentes, **caractérisé en ce que** l'information de contrôle est présente sous la forme d'un code d'authentification de message (MAC - Message Authentication Code).

7. Procédé selon l'une des revendications précédentes, **caractérisé en ce que** le contrôle de l'authenticité est effectué sous la forme d'un contrôle du code d'authentification de message.

8. Procédé selon l'une des revendications précédentes, **caractérisé en ce qu'**une information de canal latéral est cachée.

9. Procédé selon l'une des revendications précédentes, **caractérisé en ce que** les données de remplissage sont fournies sous la forme d'octets de remplissage.

10. Procédé selon l'une des revendications précédentes, **caractérisé en ce que** le procédé offre une interface, laquelle offre des services de données supplémentaires d'au moins un accès limité au paquet de données.

11. Procédé selon l'une des revendications précédentes, **caractérisé en ce que** le procédé est configuré sous la forme d'un protocole de réseau.

12. Procédé selon l'une des revendications précédentes, **caractérisé en ce qu'**une interface exclusive est prévue sur le paquet de données.

13. Dispositif de contrôle de l'authenticité et de décryptage d'un message crypté, avec sécurisation du canal latéral, comprenant :
- une mémoire de données, conçue pour la fourniture (100) un paquet de données présentant le message crypté y compris des données de remplissage ainsi qu'une information de contrôle (MAC) servant au contrôle de l'authenticité du message ;
- une unité de décryptage conçue pour le décryptage (101) du message crypté y compris les données de remplissage ;
- une unité d'extraction conçue pour la suppression (102) des données de remplissage ; et
- une unité de contrôle conçue pour la réalisation (103) du contrôle de l'authenticité du message décrypté (101) en utilisant l'information de contrôle (MAC) indépendamment d'un résultat du décryptage (101), **caractérisé en ce que** l'unité de contrôle est conçue pour réaliser le contrôle de l'authenticité sur au moins deux contenus partiels du paquet de données, les deux contenus partiels se différenciant d'une unité de longueur.

14. Dispositif selon la revendication 13, **caractérisé en ce que** l'unité de contrôle est conçue pour réaliser un premier contrôle de l'authenticité sur n blocs du paquet de données et un deuxième contrôle de l'authenticité sur n-1 blocs du paquet de données, et une première information de contrôle (MAC1) pour n-1 blocs du paquet de données ainsi qu'une deuxième information de contrôle (MAC2) pour n blocs du paquet de données sont calculées afin de ne pas obtenir des temps d'exécution différents.

15. Produit de programme informatique comprenant des instructions de commande qui mettent en œuvre le procédé selon l'une des revendications 1 à 12 lorsqu'elles sont amenées à être exécutées sur un ordinateur.
